# EUROPÄISCHE PATENTSCHRIFT

(11) **EP 2 390 986 B1**
(45) Veröffentlichungstag und Bekanntmachung des Hinweises auf die Patenterteilung: **15.11.2017**
(21) Anmeldenummer: 10005447.7
(22) Anmeldetag: 26.05.2010
(51) Int. Cl.: H02K 1/27, H02K 1/30, H02K 5/167, H02K 15/03

(54) **Permanentmagnetrotor für einen Elektromotor**
Permanent magnet rotor for an electric motor
Rotor à aimant permanent pour un moteur électrique

(43) Veröffentlichungstag der Anmeldung: 30.11.2011
(73) Patentinhaber: Grundfos Management a/s, 8850 Bjerringbro (DK)
(72) Erfinder: Kjær, Oluf, 8850 Bjerringbro (DK); Rasmussen, Keld Folsach, 8643 Ans (DK); Vad, Martin, 8960 Randers Sø (DK)
(74) Vertreter: Hemmer, Arnd

(56) Entgegenhaltungen:
- EP-A1- 1 039 615
- EP-A1- 1 427 087
- EP-A1- 1 841 041
- EP-A2- 1 978 620
- DE-A1- 10 314 394
- DE-A1-102006 000 446
- FR-A- 1 078 100
- FR-A1- 2 842 362
- US-A- 3 842 148
- US-A1- 2007 222 305
- US-A1- 2008 012 434

## Beschreibung

Die Erfindung betrifft einen Permanentmagnetrotor für einen Elektromotor sowie einen Elektromotor mit einem solchen Permanentmagnetrotor.

Beispielsweise aus EP 1 427 087 ist ein Permanentmagnetrotor für einen Elektromotor, insbesondere einen nasslaufenden Elektromotor einer Pumpe bekannt, bei welchem der Rotorkörper aus einem Kunststoffmaterial gebildet ist, welches mit der Rotorwelle vergossen ist. Bei diesem bekannten Rotor sind in das Kunststoffmaterial Ringmagnete eingebettet. Die Einbettung der Ringmagnete erfordert es, diese vor dem Spritzgießen des Rotorkörpers in das Werkzeug einzulegen. Darüber hinaus besteht das Problem, dass das Kunststoffmaterial beim Erstarren schrumpft, sodass es im Inneren des Rotors, insbesondere zwischen dem Permanentmagneten und dem Kunststoffmaterial sowie zwischen dem Kunststoffmaterial und der Welle, zu Spannungen kommt, welche zu Rissen und Beschädigung des Rotors führen können, welche die Funktion des Elektromotors beeinträchtigen.

Beispielsweise US 3,842,148 offenbart einen aus thermoplastischen Material gefertigten Rotor mit eingebetteten Magnetpartikeln. Dieser Rotor weist eine zentrale zylindrische Nabe auf, welche über einen scheibenförmigen Verbindungsbereich mit einem in axialer Richtung dicker ausgebildeten Umfangsbereich verbunden ist. Dieser Umfangsbereich bildet einen ringförmigen Rotor von zylindrischer Form, in welchem die Magnetpartikel eingebettet sind. Der Verbindungsbereich weist ferner drei sich in radialer Richtung erstreckender Stege auf.

Im Hinblick auf diesen Stand der Technik ist es Aufgabe der Erfindung, einen verbesserten Permanentmagnetrotor zu schaffen, welcher eine einfache Fertigung ermöglicht und darüber hinaus eine verbesserte Haltbarkeit aufweist.

Diese Aufgabe wird durch einen Permanentmagnetrotor für einen Elektromotor mit den in Anspruch 1 angegebenen Merkmalen sowie durch einen Elektromotor mit dem in Anspruch 19 angegebenen Merkmalen gelöst. Bevorzugte Ausführungsformen ergeben sich aus den Unteransprüchen, der nachfolgenden Beschreibung sowie den beigefügten Zeichnungen.
Der erfindungsgemäße Permanentmagnetrotor für einen Elektromotor weist eine zentrale Welle und einen diesen umgebenden Rotorkörper auf. Dabei kann die Welle aus Metall, insbesondere aber aus einem keramischen Material, gefertigt sein. Die Welle kann dabei axial über die Axialenden des Rotorkörpers vorstehen, um in diesen Bereichen in radialer Richtung gelagert zu werden und die Verbindung zu einem angetriebenen Bauteil herzustellen. Bevorzugt bildet dabei die Oberfläche der Welle gleichzeitig eine Radiallagerfläche.
Erfindungsgemäß ist der Rotorkörper aus einem Kunststoffmaterial mit eingebetteten Magnetpartikeln gefertigt. Ein solcher Rotorkörper aus dem Kunststoffmaterial mit den eingebetteten Magnetpartikeln kann im Spritzguss gefertigt werden. Dies ermöglicht zum einen eine kostengünstige Fertigung. Zum anderen kann eine sehr gleichmäßige Verteilung der Magnetpartikel, welche permanentmagnetische Eigenschaften aufweisen, in dem Rotorkörper erreicht werden, sodass eine optimierte Ausgestaltung des magnetischen Feldes des Rotors möglich wird. Hierdurch kann der Wirkungsgrad des Elektromotors und insbesondere die Geräuschentwicklung des Elektromotors im Betrieb optimiert werden. Durch entsprechende Orientierung der Magnetpartikel in dem Kunststoffmaterial können die einzelnen Pole des Rotors in dem Rotorkörper ausgebildet werden.
Erfindungsgemäß ist der Rotorkörper an die Welle angegossen, d. h. die Welle wird mit dem Rotorkörper beim Spritzgießen des Rotorkörpers verbunden. Dazu kann die Welle vor dem Spritzgießen des Rotorkörpers in das Werkzeug eingelegt werden. Erfindungsgemäß ist der Rotorkörper mit der Welle über mehrere einzelne, voneinander durch Freiräume beabstandete Verbindungsstege verbunden. Das bedeutet, der Rotorkörper ist nicht über den vollen Umfang mit der Welle verbunden, sondern nur in einzelnen voneinander beabstandeten Umfangsabschnitten. Zwischen diesen Abschnitten bzw. Anlagebereichen sind Freiräume ausgebildet. Auf diese Weise können Spannungen zwischen Welle und Rotorkörper, insbesondere aufgrund der Schrumpfung des Rotorkörpers beim Erstarren und durch Temperaturänderungen des Pumpenmediums bei Verwendung in einem nasslaufenden Motor sowie Temperaturänderung der Wicklungstemperatur vermieden werden. Dadurch wird insgesamt eine sicherere und festere Verbindung zwischen Welle und Rotorkörper erreicht, welche eine verbesserte Dauerhaltbarkeit aufweist. Unerwünschte Spannungsrisse können auf diese Weise vermieden werden.

Die Magnetpartikel können beispielsweise aus einem Ferritmaterial oder Neodymium bestehen bzw. diese Materialien enthalten. Als Kunststoff kann beispielsweise Polyphenylensulfid (PPS) Verwendung finden. Der Anteil der Magnetpartikel macht bevorzugt zwischen 60 % und 95 %, der Anteil des Kunststoffmaterials entsprechend zwischen 5 % und 40 % des Gemisches aus Kunststoffmaterial und Magnetpartikeln aus.
Die Verbindungsstege sind vorzugsweise so dimensioniert und in Umfangsrichtung bezogen auf die Längs- bzw. Drehachse der Welle derart voneinander beabstandet, dass hinsichtlich der zwischen dem Rotorkörper und der Welle wirkenden Kräfte eine gleichmäßige Kraft- bzw. Spannungsverteilung über den Umfang der Welle erreicht wird. Dies gilt insbesondere für diejenigen Spannungen, welche durch das Schrumpfen des Kunststoffmaterials beim Erstarren des Rotorkörpers hervorgerufen werden. Durch die gleichmäßige Krafteinleitung von dem Rotorkörper auf die Welle und umgekehrt wird eine gleichmäßige Spannungsverteilung ohne Spannungsspitzen erreicht, wodurch die Gefahr der Rissbildung im Rotor minimiert wird.

Besonders bevorzugt sind die Verbindungsstege gleichmäßig über den Umfang der Welle verteilt. Dies begünstigt die gleichmäßige Kraftübertragung zwischen Rotorkörper und Welle ohne unerwünschte Spannungsspitzen. Gleichzeitig wird eine Symmetrie des Rotors erreicht, welche zum einen der Vermeidung von Unwuchten dient, zum anderen jedoch auch eine Symmetrie im magnetischen Fluss bzw. Magnetfeld des Rotors bewirkt, wodurch der Lauf des Elektromotors optimiert werden kann. Besonders bevorzugt entspricht die Anzahl der Verbindungsstege einem ganzzahligen Vielfachen der Anzahl von magnetischen Polen des Rotors. Auf diese Weise wird eine Symmetrie zwischen der mechanischen und magnetischen Ausgestaltung des Rotors erreicht, wodurch der magnetische Wirkungsgrad optimiert werden kann und gleichzeitig ein ruhiger Lauf des Elektromotors erzielt werden kann.

Die Verbindungsstege gewährleisten vorzugsweise eine gewisse Verformbarkeit der Verbindung zwischen Rotorkörper und Welle, ohne dass es zu unerwünschten Spannungen in dieser Verbindung kommt. So ermöglicht die Verformbarkeit der Verbindungsstege eine Kompensation der Verformung, welche durch das Schrumpfen des Kunststoffmaterials beim Erstarren auftritt, um das Auftreten von Spannungen und somit die Gefahr der Rissbildung zu verhindern. Die Verbindungsstege sind zweckmäßigerweise einstückig mit dem Rotorkörper, vorzugsweise aus demselben Gemisch von Kunststoff und Magnetpartikeln ausgebildet.

Erfindungsgemäß liegt jeder Verbindungssteg mit einem einzelnen Anlagebereich an der Welle an und die Anlagebereiche der einzelnen Verbindungsstege sind in Umfangsrichtung voneinander beabstandet. Auf diese Weise wird erreicht, dass die Welle von den Verbindungsstegen nicht über die gesamte Umfangsfläche kontaktiert wird, wodurch Spannungsspitzen bei der Kraftübertragung zwischen der Welle und dem Rotorkörper bzw. den Verbindungsstegen vermieden werden. Wie auch die Verbindungsstege sind die Anlagebereiche dabei vorzugsweise gleichmäßig über den Umfang der Welle verteilt und weiter bevorzugt symmetrisch angeordnet und ausgestaltet. Insbesondere entspricht die Zahl der Anlagebereiche dabei ebenfalls einem ganzzahligen Vielfachen der Anzahl der magnetischen Pole des Rotors. Es ist zu verstehen, dass alternativ die Anlagebereiche der einzelnen Verbindungsstege auch zumindest in einzelnen axialen Abschnitten des Rotors miteinander verbunden sein können. Auch ist es denkbar, dass die Verbindungsstege an ihrem radial inneren Ende an einer die Welle umgebenden Hülse enden, bzw. einstückig in eine solche Hülse übergehen, welche dann die Verbindung zum Außenumfang der Welle herstellt. Auch ist es möglich, dass lediglich einzelne Anlagebereiche, beispielsweise zweier benachbarter Verbindungsstege miteinander verbunden sind, andere Anlagebereiche jedoch voneinander beabstandet sind.
Bevorzugt ist die Breite der Verbindungsstege in Umfangsrichtung bezogen auf die Längs- bzw. Drehachse der Welle jeweils in zumindest einem ersten der Welle zugewandten oder an die Welle angrenzenden Abschnitt konstant. Weiter bevorzugt schließt sich in radialer Richtung an diesen ersten Abschnitt, d. h. an der der Welle radial abgewandten Seite des ersten Abschnittes, jeweils ein zweiter Abschnitt an, in welchem die Breite in Umfangsrichtung gegenüber dem ersten Abschnitt zu- oder abnimmt. Durch diese Formgebung der Verbindungsstege kann die genannte Verformbarkeit und Spannungsverteilung so optimiert werden, dass unerwünschte Spannungsspitzen im Material vermieden werden.

Weiter bevorzugt haben die Verbindungsstege eine radiale Ausdehnung, welche 35 % bis 60 % der radialen Ausdehnung des Rotorkörpers beträgt. D. h. die radiale Ausdehnung der Verbindungsstege vom Außenumfang der Welle bis zum radial äußerem Ende der Verbindungsstege beträgt 35% bis 60% der radialen Ausdehnung des Rotorkörpers zwischen Außenumfang der Welle und Außenumfang des Rotorkörpers. Durch diese Dimensionierung der Länge der Verbindungsstege wird zum einen der gewünschte Spannungszustand der Verbindung zwischen Rotorkörper und Welle erreicht, zum anderen aber im Rotorkörper gleichzeitig ein ausreichendes Volumen mit darin eingebetteten Magnetpartikeln sichergestellt, um eine ausreichende magnetischen Feldstärke zu gewährleisten.

Im Querschnitt normal zur Längsachse der Welle beträgt vorzugsweise die Länge des gesamten Kontaktbereiches der Verbindungsstege mit der Welle, d. h. die Summe aller Anlagebereiche der Verbindungsstege an der Welle, 40 % bis 80 % des Umfanges der Welle. Auf diese Weise wird zum einen eine ausreichende feste Verbindung zwischen Welle und Verbindungsstegen und damit zwischen Welle und Rotorkörper realisiert, zum anderen verbleiben jedoch ausreichend Freiräume, um die gewünschte Verformbarkeit der Verbindungsstege zur Veränderung von unerwünschten Spannungen zu gewährleisten. Die Querschnittesfläche der Verbindungsstege kann dabei vorzugsweise ebenfalls 40 % bis 80 % der Gesamtquerschnittsfläche aller Verbindungsstege und der zwischen diesen gelegenen Freiräumen betragen.

Darüber hinaus erstrecken sich die Verbindungsstege im Querschnitt normal zu der Längsachse der Welle gesehen zwischen Welle und Rotorkörper zweckmäßigerweise gewinkelt zum Radius. D. h. die Verbindungsstege erstrecken sich im Querschnitt gesehen, nicht genau in radialer Richtung sondern gekrümmt oder gewinkelt zum Radius. Dies ermöglicht eine Verformbarkeit der Speichen bzw. Verbindungsstege durch Biegen, sodass eine gewisse Änderung des Abstandes zwischen Rotorkörper und Welle aufgrund der Schrumpfung des Rotorkörpers beim Erstarren kompensiert werden kann. Besonders bevorzugt weisen die Verbindungsstege jeweils einen der Welle zugewandten oder an die Welle angrenzenden ersten Abschnitt auf, welcher sich in radialer Richtung erstreckt, und einen sich in radialer Richtung anschließenden zweiten Abschnitt auf, welcher sich gewinkelt bzw. gekrümmt zu dem ersten Abschnitt und zum Radius erstreckt. Dabei kann der zweite Abschnitt, wie oben beschrieben, auch im Querschnitt gesehen eine geringere Breite aufweisen, als der erste Abschnitt. Durch diese Ausgestaltung wird erreicht, dass über den ersten Abschnitt eine sichere Verbindung mit gleichmäßiger Kraftübertragung zwischen Welle und Verbindungssteg erreicht wird und im angrenzenden zweiten Abschnitt des Verbindungssteges eine gewünschte Verformbarkeit zur Kompensation von Größenänderungen gegeben ist. Darüber hinaus kann in dem zweiten Abschnitt eine gewisse Elastizität erreicht werden, welche ebenfalls dazu beiträgt, Spannungsspitzen zu verhindern.

Die Freiräume zwischen den Verbindungsstegen bzw. Speichen sind zweckmäßigerweise durch sich in Längsrichtung des Rotors, d. h. insbesondere parallel zur Längs- bzw. Drehachse entsprechende Kanäle gebildet, welche sich zu zumindest einem Längsende des Rotorkörpers hin im Querschnitt erweitern. Dabei können diese Kanäle ferner vorzugsweise so ausgebildet sein, dass sie sich durchgehend über die gesamte Länge des Rotorkörpers erstrecken und dabei bevorzugt zu beiden Längs- bzw. Axialenden des Rotorkörpers hin geöffnet sind. Dies ermöglicht eine verbesserte Zirkulation und Entlüftung der Pumpenflüssigkeit beim Einsatz in einem nasslaufenden Elektromotor. Alternativ können die Kanäle durch eine Trennwand jeweils in zwei Teile geteilt sein, wobei jeder Teil zu einem Längs- bzw. Axialende des Rotors bzw. Rotorkörpers geöffnet ist. Die Trennwand ist dabei vorzugsweise an der axialen Mitte des Rotorkörpers gelegen. Die Kanäle bzw. die Teile der Kanäle sind bevorzugt so ausgebildet, dass sie sich zu den offenen Axialenden an den Längsenden des Rotorskörpers hin erweitern. Diese Ausgestaltung ermöglicht es, die Freiräume durch in axialer Richtung eingesetzte Kerne beim Spritzgießen des Rotorkörpers zu erzeugen. Rotorkörper und Verbindungsstege sind bevorzugt einstückig gegossen. D. h. beim Gießen des Rotorkörpers werden die Verbindungsstege ausgebildet und gleichzeitig durch Angießen an die Welle die Verbindung zwischen Verbindungsstegen und Welle realisiert. So wird eine einfache Fertigung des gesamten Rotors in einem Spritzgussvorgang ermöglicht. Die Erweiterung der Kanäle in Längsrichtung zu den offenen Seiten hin ermöglicht dabei das Entnehmen der Kerne nach dem Spritzgießen.

Wie beschrieben ist der Rotorkörper vorzugsweise im Spritzguss gefertigt. Dabei sind die Angussstellen bevorzugt an eine Winkelposition bzgl. der Längs- bzw. Drehachse der Welle gelegen, welche jeweils der Winkelposition eines magnetischen Pols entsprechen. Durch diese Ausgestaltung wird erreicht, dass die Bereiche des Rotorkörpers, in welchen die magnetischen Pole ausgebildet werden, besonders homogen gegossen sind, sodass es hier zu keinerlei Beeinträchtigungen des magnetischen Feldes kommt und insbesondere die volle magnetischen Feldstärke erreicht werden kann. Wenn mehrere Angüsse vorgesehen sind, wird so erreicht, dass die Zonen, in welchen das durch die verschiedenen Angüsse eingespritzte Kunststoffmaterial miteinander in Kontakt tritt, zwischen den magnetischen Polen gelegen sind. Diese Bereiche sind möglicherweise nicht vollständig homogen gegossen und werden somit in Bereiche des Rotorkörpers gelegt, in welchen keine oder nur geringe magnetische Feldstärken erforderlich sind.

Gemäß einer besonderen Ausführungsform der Erfindung weisen die Magnetpartikel, welche in das Kunststoffmaterial eingebettet sind, anisotrope magnetische Eigenschaften auf und es erfolgt eine Ausrichtung der Magnetpartikel in eine gewünschte Richtung und bevorzugt eine Polarisierung vor dem Erstarren des Kunststoffmaterials. Die Polarisierung kann dabei während des Spritzgießens oder während des Erstarrungsvorganges erfolgen. Durch die Polarisierung werden die Magnetpartikel im Rotorkörper so gerichtet, dass die magnetischen Pole, d. h. abwechselnde Nord- und Südpole, ausgebildet werden. Dabei wird der Rotorkörper besonders bevorzugt nicht radial sondern sinusförmig magnetisiert. Das bedeutet, über den Umfang wird eine sinusförmige magnetische Flussdichte erreicht. Diese führt zu einem besonders ruhigen Lauf des Elektromotors, insbesondere beim Betrieb mit einem dem Elektromotor vorgeschalteten Frequenzenumrichter. Bei dieser Magnetisierung erstrecken sich die Feldlinien bogenförmig zwischen benachbarten Nord- und Südpolen durch den Rotorkörper.

Zweckmäßigerweise ist der Rotorkörper an seinem Außenumfang von einem Mantel aus Metallumgeben, welcher insbesondere aus rostfreiem Stahl gefertigt ist und/oder zumindest ein axiales Ende des Rotorkörpers umgreift. Ein solcher Mantel trägt zur zusätzlichen Stabilisierung des Rotorkörpers bei und kann insbesondere eine Korrosion am Außenumfang des Rotors verhindern, welche bei Verwendung des Rotors in einem nasslaufenden Motor zu Problemen führen könnte. Der Mantel aus Metall ist an zumindest einem, vorzugsweise beiden axialen Enden bzw. Längsenden des Rotorkörpers derart umgebogen, bzw. umgebördelt, dass er das Ende axialseitig umgreift. Auf diese Weise wird erreicht, dass der Mantel den Rotorkörper auch in axialer Richtung zusätzlich zusammenhält bzw. stabilisiert. Gleichzeitig wird eine sichere Fixierung des Mantels auf dem Rotorkörper erreicht.

Gemäß einer weiteren bevorzugten Ausführungsform sind an zumindest einem Axialende des Rotors sich in axialer Richtung, d. h. parallel zur Längs- bzw. Drehachse, der Welle erstreckende Vorsprünge vorhanden, welche zur Aufnahme eines Lagers dienen oder an ihrem Axialende jeweils Gleitflächen aufweisen, welche selbst als Lagerflächen dienen. Diese Gleitflächen bzw. an den Vorsprüngen aufgenommen Lager dienen der Axiallagerung der Rotorwelle. Insbesondere bei Verwendung in einem Pumpenaggregat können die beiden Längsenden des Rotors jeweils als Axiallager bzw. Axiallagerflächen ausgebildet sein, wobei diese unterschiedlich dimensioniert sein können. Im Betrieb sind in einem Pumpenaggregat die Axialkräfte meist in eine vorbestimmte Richtung gerichtet, sodass zur Aufnahme dieser Kräfte ein entsprechend gerichtetes Axiallager vorgesehen werden muss. In der entgegengesetzten Richtung ist meist lediglich ein "Notlager" erforderlich, welches beim Anlaufen erforderlich ist, im Betrieb jedoch im Wesentlichen keine Axialkräfte aufweist. Insbesondere ein solches "Notlager" kann direkt durch die Gleitflächen an Axialflächen der Vorsprünge gebildet sein. Jedoch kann auch das die im Betrieb auftretenden Axialkräfte aufnehmende Lager direkt durch derartige Gleitflächen gebildet sein.

Besonders bevorzugt erstrecken sich die Vorsprünge jeweils ausgehend von einem der den Rotorkörper mit der Welle verbindenden Verbindungsstege bzw. Speichen in axialer Richtung. Da die Verbindungsstege sich vorzugsweise über die gesamte Axiallänge des Rotors bzw. des Rotorkörpers erstrecken, sind diese besonders gut zur Aufnahme der Axialkräfte geeignet. Darüber hinaus ermöglicht diese Anordnung, die zur Ausbildung der Freiräume zwischen den Verbindungsstegen erforderlichen Kerne nach dem Spritzgießen zwischen den Vorsprüngen herauszuziehen. Bevorzugt ist an jedem oder jedem zweiten Verbindungssteg ein solcher Vorsprung ausgebildet. So ist es beispielsweise möglich, an derjenigen Axialseite, an welcher lediglich ein Notlager ausgebildet oder angeordnet werden muss, nur an jedem zweiten Verbindungssteg einen solchen Vorsprung vorzusehen, während am entgegengesetzten Axialende des Rotors, an welchem das eigentliche Axiallager angeordnet werden muss, an jedem Verbindungssteg ein solcher Vorsprung vorzusehen ist.

Die Vorsprünge sind vorzugsweise zumindest an ihrem äußerem freien Axialende in radialer Richtung vom Außenumfang der Welle beabstandet. Dies ermöglicht es, im Bereich der Axiallagerung eine direkte Kraftübertragung in radialer Richtung auf die Welle zu unterbinden, sodass unerwünschte Spannungen in diesen Bereichen verhindert werden können.

Gemäß einer besonderen Ausführungsform der Erfindung können zumindest zwei Vorsprünge miteinander verbundene Anlageflächen für ein Lager oder miteinander verbundene Gleitflächen aufweisen. So ist es auch denkbar, dass von den Vorsprüngen durchgehende ringförmige Anlage- oder Gleitflächen zur Axiallagerung gebildet werden. Dabei werden Brücken über die Freiräume zwischen den Verbindungsstegen gebildet, um die Anlageflächen bzw. Gleitflächen zweier Vorsprünge miteinander zu verbinden. Um ein Herausziehen der Kerne aus den Freiräumen dennoch in axialer Richtung zu ermöglichen, können diese zum entgegengesetzten Axialende jeweils geöffnet ausgebildet sein.

An der Welle ist ferner zweckmäßigerweise zumindest ein Formschlussmittel zum formschlüssigen Eingriff mit dem Rotorkörper oder mit zumindest einem dem Rotorkörper mit der Welle verbindenden Verbindungssteg ausgebildet. Dieser formschlüssige Eingriff stellt dabei eine Kraftübertragung in axialer Richtung und/oder in Umfangsrichtung sicher. Somit wird durch den Formschluss die Kraftübertragung in Axial- und/oder Umfangsrichtung zusätzlich zu der kraft- und/oder stoffschlüssigen Verbindung zwischen Rotorkörper und Welle sichergestellt.

Die Formschlussmittel können dabei vorzugsweise zumindest eine umfängliche und/oder zumindest eine sich schräg zur Umfangslinie erstreckende Nut aufweisen. Eine Umfangsnut dient dabei als Formschlussmittel, welche zur Kraftübertragung in axialer Richtung geeignet ist. Eine sich schräg zur Umfangslinie erstreckende Nut ermöglicht eine Kraftübertragung sowohl in axialer als auch in Umfangsrichtung, sofern sich die Nut in einem Winkel < 90° zur Umfangslinie erstreckt. Erstreckt sich die Nut in einem Winkel von 90° zur Umfangslinie, d. h. im Wesentlichen parallel zur Längs- bzw. Drehachse der Welle, wird eine Kraftübertragung nur in Umfangsrichtung erreicht. Besonders bevorzugt ist es, dass eine ringförmige Umfangsnut an der Welle im Bereich eines Axialendes des Rotorkörpers angeordnet ist, während eine oder mehrere schräg verlaufende Nuten im Bereich des entgegengesetzten Axialendes des Rotorkörpers angeordnet sind.

Weiter bevorzugt sind zumindest zwei schräg verlaufende Nuten vorhanden, wobei diese zueinander gewinkelt sind. Beispielsweise können insgesamt vier schräg verlaufende Nuten vorgesehen sein, wobei die Nuten in Umfangsrichtung jeweils um 90° versetzt zueinander angeordnet sind. Dabei können sich zwei Nuten in der einen Richtung gewinkelt und die zwei anderen Nuten in der anderen Richtung gewinkelt zur Umfangslinie erstrecken, wobei die unterschiedlich gewinkelten Nuten vorzugsweise abwechselnd angeordnet sind. Bevorzugt können die Nuten in einem Winkel von 45° zur Umfangslinie gewinkelt sein, sodass sich zwei benachbarte Nuten jeweils V-förmig zueinander erstrecken. Durch diese Anordnung der Nuten wird eine Kraftübertragung in allen Richtungen und darüber hinaus eine besonders sichere Verbindung zwischen Rotorkörper und Welle erreicht. Durch die gleichmäßige Verteilung der schräg verlaufenden Nuten um den Umfang der Welle wird darüber hinaus sichergestellt, dass die Anlagebereiche zwischen Welle und Rotorkörper diese Nuten überdecken, sodass es in diesem Anlagebereichen zu einem Formschluss zwischen Welle und Rotorkörper bzw. zwischen Welle und Verbindungsstegen kommt.

Die Erfindung betrifft ferner einen Elektromotor mit einem Permanentmagnetrotor gemäß der vorangehenden Beschreibung. Vorzugsweise handelt es sich bei dem Elektromotor um einen nasslaufenden Elektromotor mit ggf. einem Spaltrohr, in welchem die Pumpenflüssigkeit im Inneren des Spaltrohres zirkuliert, für welchen ein solcher Permanentmagnetrotor besonders geeignet ist. Ein solcher nasslaufenden Elektromotor kann beispielsweise Teil eines Umwälzpumpenaggregates, insbesondere eines Heizungsumwälzpumpenaggregates, sein, welche ebenfalls Gegenstand der vorliegenden Erfindung sind.

Nachfolgend wird die Erfindung beispielhaft anhand der beigefügten Figuren beschrieben. In diesen zeigt:

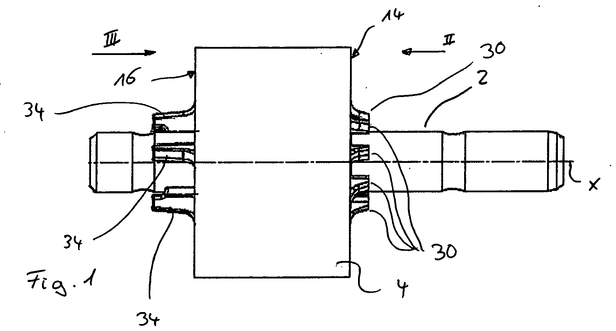

- Fig. 1: eine Seitenansicht eines erfindungsgemäßen Permanent-magnetrotors,
- Fig. 2: eine Draufsicht auf die erste Axialseite des Rotors gemäß Fig. 1 in Richtung des Pfeils II in Fig. 1,
- Fig. 3: eine Draufsicht auf die entgegengesetzte zweite Axialseite des Rotors gemäß Fig. 1 in Richtung des Pfeils III in Fig. 1,
- Fig. 4: eine Schnittansicht entlang der Linie IV-IV in Fig. 2,
- Fig. 5: eine Vergrößerung des Ausschnittes V in Fig. 4 und
- Fig. 6: eine perspektivische Ansicht der Welle des Permanentmagnetrotors.

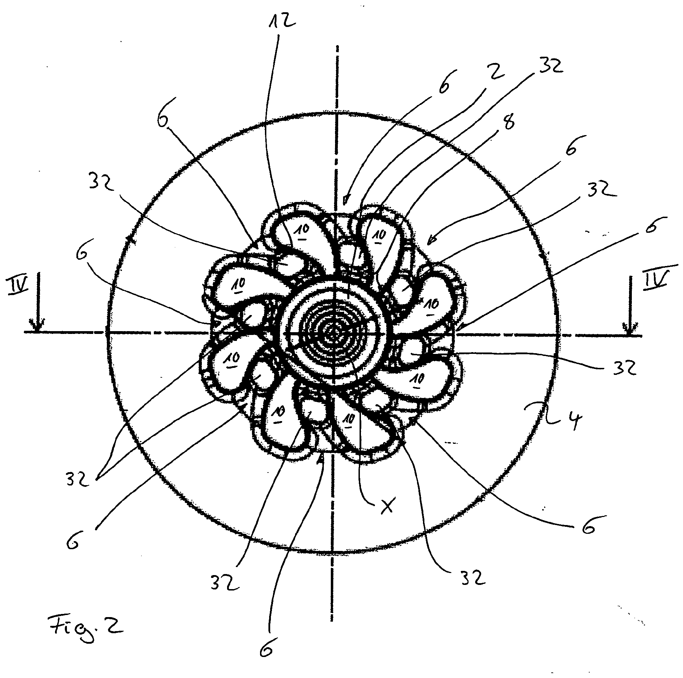

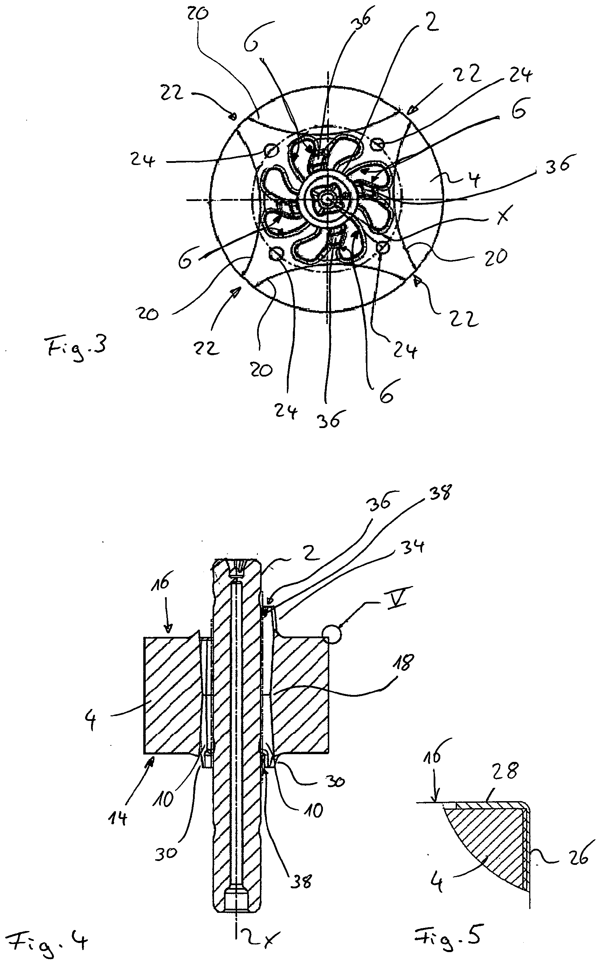

Der erfindungsgemäße Permanentmagnetrotor weist eine zentrale Welle 2 auf. Diese ist beispielsweise aus keramischem Material ausgebildet und weist geschliffene Oberflächen auf, welche gegebenenfalls direkt als Radiallagerflächen dienen können. Auf die Welle 2 ist ein Rotorkörper 4 aufgesetzt. Der Rotorkörper 4 ist erfindungsgemäß direkt an die Welle 2 angegossen und aus einem Kunststoffmaterial mit eingebetteten Magnetpartikeln, d. h. permanentmagnetischen Partikeln, beispielsweise aus einem Ferrit- oder Neodymiummaterial gebildet. Wie in den Figuren 2 und 3 zu erkennen ist, ist der Rotorkörper 4 über acht Verbindungsstege 6 mit der Welle 2 verbunden. Die Verbindungsstege 6 liegen mit einem ersten Abschnitt 8 am Außenumfang der Welle 2 an. Dabei macht der Anlagebereich im Querschnitt normal zur Dreh- bzw. Längsachse X der Welle 2 gesehen nur einen Teilbereich der Umfangslinie der Welle 2 aus, d. h. es gibt acht einzelne voneinander beabstandete Anlagebereiche. Zwischen den Verbindungsstegen 6 sind Freiräume 10 ausgebildet, welche somit ebenfalls an den Außenumfang der Welle 2 angrenzen. Die mechanische Verbindung zwischen Rotorkörper 4 und Welle 2 wird allein über die Verbindungsstege 6 hergestellt, welche einstückig mit dem Rotorkörper 4 gegossen sind.

Die ersten Abschnitte 8 der Verbindungsstege 6 erstrecken sich zunächst im Wesentlichen in radialer Richtung ausgehend vom Außenumfang der Welle 2. Radial weiter nach außen schließt sich jeweils ein zweiter Abschnitt 12 an, welcher dann radial außen mit dem Rotorkörper 4 verbunden ist, bzw. in diesen übergeht. Der zweite Abschnitt 12 ist jeweils zu dem ersten Abschnitt 6 gewinkelt, sodass sich der zweite Abschnitt 12 in einem Winkel zum Radius bezogen auf die Längsachse X erstreckt. Durch diese schräge bzw. gewinkelte Form der Verbindungsstege 6 ergibt sich eine gewisse Verformbarkeit der Verbindungsstege 6, um ein Schrumpfen des Rotorkörpers 4 beim Erstarren ausgleichen zu können. Auf diese Weise werden Spannungen im Rotorkörper 4 und insbesondere im Bereich der Verbindung mit der Welle 2 vermieden. So können Spannungsrisse, welche die Dauerhaltbarkeit des Rotors beeinträchtigen, verhindert werden.
Wie in Fig. 4 zu erkennen ist, erstrecken sich die Freiräume 10 über die gesamte axiale Länge des Rotorkörpers 4 von der ersten axialen Stirnseite 14 zu der zweiten axialen Stirnseite 16. Dabei sind die Freiräume 10 als zu beiden Stirnseiten 14, 16 offene Kanäle ausgebildet. Die Freiräume 10 sind so ausgebildet, dass sie sich jeweils von der axialen Mitte 18 her zu den axialen Stirnseiten 14, 16 des Rotorskörpers 4 hin konisch erweitern. Dies ermöglicht es, Kerne zum Ausbilden der Freiräume 10 nach dem Spritzgießen in axialer Richtung aus den Freiräumen 10 hinauszuziehen, wobei somit jeder Freiraum durch zwei sich in der axialen Mitte 18 berührende Kerne gebildet wird.
In Fig. 3 ist zusätzlich die Magnetisierung des Rotors schematisch in Form der Feldlinien 20 eingezeichnet. Es ist zu erkennen, dass der Rotor vier Pole 22 aufweist, welche abwechselnd als Nord- und Südpole ausgebildet sind. Wie anhand der Feldlinienverläufe 20 zu erkennen ist, ist der Rotor in diesem Ausführungsbeispiel nicht radial sondern sinusförmig magnetisiert. Das bedeutet, der Verlauf der Feldstärke folgt über den Umfang des Rotorkörpers 4 einer Sinusfunktion. Diese Art der Magnetisierung führt zu einem ruhigeren Lauf des Motors.
Wie ferner in Fig. 3 zu erkennen ist, besteht eine Symmetrie zwischen der magnetischen Ausgestaltung des Rotors und der Anordnung der Verbindungsstege 6. Die Zahl der Verbindungsstege 6 entspricht dem Zweifachen der Anzahl von magnetischen Polen 22. Darüber hinaus sind die magnetischen Pole 22 bei diesem Ausführungsbeispiel so gelegen, dass sie immer in radialer Verlängerung eines Verbindungssteges 6 liegen.

Die Symmetrie zwischen mechanischer Gestaltung des Rotors bzw. des Rotorkörpers 4 und der magnetischen Gestaltung hat ebenfalls Vorteile im Hinblick auf einen ruhigen Lauf des Motors.

Der Rotorkörper 4 mit den Verbindungsstegen 6 ist, wie oben beschrieben, im Spritzguss aus einem Kunststoffmaterial mit eingebetteten permanentmagnetischen Partikeln gefertigt. Auch beim Spritzgießen ist auf eine Symmetrie des mechanischen Aufbaus zur magnetischen Gestaltung geachtet. So sind vier Angüsse 24 vorgesehen, durch welche das Kunststoffmaterial mit den eingebetteten Magnetpartikeln in das Werkzeug eingespritzt wird. Die Angüsse 24 liegen dabei bezogen auf die Längsachse X jeweils an den Winkelpositionen der auszubildenden Pole 22. Dadurch wird erreicht, dass die Kontaktzonen bzw. Vermischungsbereiche, in welchen die durch die einzelnen Angüsse 4 eingespritzten Kunststoffmengen miteinander in Kontakt treten, jeweils zwischen den magnetischen Polen 22 gelegen sind. Diese Bereiche weisen möglicherweise eine schlechtere Homogenität auf, weshalb es von Vorteil ist, die magnetischen Pole an die Winkelposition der Angüsse 24 zu legen. In diesen Bereichen ist das Kunststoffmaterial des Rotorkörpers 4 besonders homogen, sodass hier die magnetischen Pole mit den maximalen magnetischen Feldstärken und reproduzierbarer Qualität ausgebildet werden können.

Wie in Fig. 5 gezeigt, ist der Rotorkörper 4 an seinem Außenumfang von einem metallischen Mantel 26, insbesondere aus rostfreiem Edelstahl umhüllt. Dieser Mantel 26 verbessert die mechanische Stabilität des Rotors und verhindert insbesondere Korrosion am Außenumfang des Rotorkörpers 4. Der Mantel 26 ist um das Axialende 16 des Rotorkörpers 4 umgebogen bzw. umgebördelt, sodass ein umgebogener in einer Durchmesserebene bzgl. der Längsachse X erstreckender Mantelabschnitt 28 gebildet wird. An der ersten axialen Stirnseite 14 ist der Mantel 26 entsprechend umgebogen (hier nicht gezeigt). Durch das Umbiegen des Mantels 26 um die axialen Stirnseiten 14 und 16 wird zusätzlich eine axiale Stabilisierung des Rotorkörpers 4 erreicht und darüber hinaus der Mantel 26 auch in axialer Richtung sicher auf dem Rotorkörper 4 fixiert.

Ebenfalls einstückig mit dem Rotorkörper 4 sind bei dem gezeigten Ausführungsbeispiel Aufnahmen für Lager bzw. Lagerflächen ausgebildet. So erstrecken sich ausgehend von der ersten axialen Stirnseite 14 des Rotorkörpers 4 in Verlängerung der Verbindungsstege 6 Vorsprünge 30 in axialer Richtung X. Zwischen den einzelnen Vorsprüngen 30 verbleiben Freiräume in Verlängerung der Freiräume 10, sodass das Entnehmen der Kerne aus den Freiräumen 10 durch diese Vorsprünge 30 nicht behindert wird. Die axialen Stirnseiten der Vorsprünge 30 sind plan als Anlageflächen 32 ausgebildet, wobei sich alle Anlageflächen 32 in einer Durchmesserebene bzgl. der Längsachse X erstrecken. Die Anlageflächen 32 dienen der Anlage eines Hauptaxiallagers an dem Rotor. Aus diesem Grunde ist an jedem Verbindungssteg ein entsprechender Vorsprung 30 mit einer Anlagefläche 32 ausgebildet. Der hier gezeigte Rotor dient insbesondere zur Verwendung in einem Pumpenaggregat, beispielsweise einem Umwälzpumpenaggregat, in welchem im Betrieb Axialkräfte im Wesentlichen nur in einer Richtung auftreten, sodass ein Axiallager als Hauptaxiallager ausgebildet werden muss, um die Kräfte in dieser Richtung aufzunehmen. Dieses Lager kommt an den Anlageflächen 32 zur Anlage. Je nach Ausgestaltung der Anlageflächen 32 und des verwendeten Materials für die Vorsprünge 30 ist es auch denkbar die Anlageflächen 32 direkt selber als Axiallagerflächen auszubilden.

Am entgegengesetzten Axialende, d. h. der axialen Stirnseite 16 des Rotorkörpers 4, ist ein "Notlager" vorgesehen, welches die Axialkräfte in der entgegengesetzten Richtung aufnimmt, welche beispielsweise beim Anlaufen der Pumpe auftreten können. Zur Ausbildung des "Notlagers" sind auch hier angegossene bzw. mitgegossene Vorsprünge 34 vorgesehen. Diese erstrecken sich ausgehend von der zweiten axialen Stirnseite 16 des Rotorkörpers 4 ebenfalls in Verlängerung der Verbindungsstege 6 in axialer Richtung X. Dabei sind hier jedoch nicht an jedem der Verbindungsstege 6 derartige Vorsprünge 34 ausgebildet, sondern lediglich an jedem zweiten Verbindungssteg. Die axialen Stirnflächen der Vorsprünge 34 bilden Lagerflächen 36, welche sich in einer Ebene normal zur Längsachse X erstrecken. Die Lagerflächen 36 kommen direkt mit einer Gegenlagerfläche zur Anlage und bilden somit ein axiales Gleitlager als "Notlager". Die Vorsprünge 34 sind so ausgebildet, dass sie sich an ihrem jeweils der Lagerfläche 36 zugewandten Ende in radialer Richtung nicht bis an den Außenumfang der Welle 2 heran erstrecken, sondern dass zwischen der Innenwandung des Vorsprunges 24 und der Außenwandung der Welle 2 ein Freiraum 38 verbleibt. Auch die Vorsprünge 30 sind in dieser Weise ausgestaltet, dass zwischen der Innenseite der Vorsprünge 30 und dem Außenumfang der Welle 2 Freiräume 38 verbleiben. Auf diese Weise werden Spannungen im Kontaktbereich mit der Welle 2 vermieden, wenn auf die Stirnseiten der Vorsprünge 30 bzw. 34 Axialkräfte wirken.

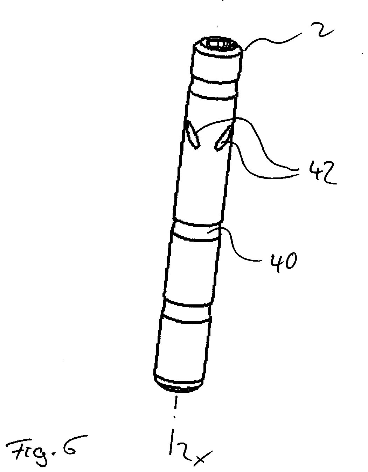

Um die Verbindung zwischen den Verbindungsstegen 6 und der Welle 2 zu verbessern, sind am Außenumfang der Welle 2 zusätzliche Formschlusselemente ausgebildet. Diese weisen zum einen eine Ringnut 40 auf, welche bei angegossenem Rotorkörper 4 nahe der ersten axialen Stirnseite 14 des Rotorkörpers 4 gelegen ist. Zum anderen weisen die Formschlusselemente 4 sich schräg zur Umfangslinie bezogen auf die Längsachse X erstreckende Nuten 42 auf. Dabei sind jeweils zwei der Nuten 42 in entgegengesetzter Richtung zueinander gewinkelt, sodass sie sich V-förmig zu einander erstrecken. Bei der Ansicht in Fig. 6 ist zu verstehen, dass zwei weitere, entsprechend ausgestaltete Nuten 42 an der Rückseite der Welle 2 in Fig. 6 gelegen sind. Die Nuten 42 sind von der Ringnut 40 in axialer Richtung X so beabstandet, dass sie nahe der zweiten axialen Stirnseite 16 des Rotorkörpers 4 gelegen sind. Dabei ist der Abstand so gewählt, dass er kleiner als die axiale Länge des Rotorkörpers 4 ist, sodass der Rotorkörper 4 sowohl die Ringnut 40 als auch die Nuten 42 umfänglich umgibt. Im Verbindungsbereich der Verbindungsstege 6 mit dem Außenumfang der Welle 2 kommt es somit dann zu einem formschlüssigen Eingriff der Verbindungsstege 6 mit der Welle 2 in der Ringnut 40 bzw. den Nuten 42. Die Ringnut 40 unterstützt dabei die axiale Kraftübertragung zwischen Rotorkörper 4 und Welle 2, während die schrägen Nuten 42 zusätzlich die Drehmomentübertragung zwischen den Verbindungsstegen 6 und der Welle 2 unterstützen.

### Bezugszeichenliste

- 2: - Welle
- 4: - Rotorkörper
- 6: - Verbindungsstege
- 8: - erster Abschnitt der Verbindungsstege
- 10: - Freiräume
- 12: - zweiter Abschnitt der Verbindungsstege
- 14, 16: - axiale Stirnseiten des Rotorkörpers
- 18: - axiale Mitte
- 20: - Feldlinien
- 22: - magnetische Pole
- 24: - Anguss
- 26: - Mantel
- 28: - Mantelabschnitt
- 30: - Vorsprünge
- 32: - Anlagefläche
- 34: - Vorsprünge
- 36: - Lagerflächen
- 38: - Freiraum
- 40: - Ringnut
- 42: - Nuten

- X: - Dreh- bzw. Längsachse

## Patentansprüche

1. Permanentmagnetrotor für einen Elektromotor mit einer zentralen Welle (2) und einem diese umgebenden Rotorkörper (4), wobei
der Rotorkörper (4) aus einem Kunststoffmaterial mit eingebetteten Magnetpartikeln besteht,
**dadurch gekennzeichnet, dass**
der Rotorkörper (4) derart an die Welle (2) angegossen ist, dass er mit der Welle (2) über mehrere einzelne, in Umfangsrichtung durch Freiräume (10) voneinander beabstandete Verbindungsstege (6) verbunden ist, wobei jeder Verbindungssteg (6) mit einem einzelnen Anlagebereich an der Welle (2) anliegt, die Anlagebereiche der einzelnen Verbindungsstege (6) voneinander beabstandet sind und sich die Freiräume (10) über die gesamte axiale Länge zwischen den Verbindungsstegen (6) erstrecken.

2. Permanentmagnetrotor nach Anspruch 1, **dadurch gekennzeichnet, dass** die Verbindungsstege (6) so dimensioniert und in Umfangsrichtung voneinander beabstandet sind, dass hinsichtlich der zwischen dem Rotorkörper (4) und der Welle (2) wirkenden Kräfte eine gleichmäßige Spannungsverteilung über den Umfang der Welle (2) erreicht wird.

3. Permanentmagnetrotor nach Anspruch 1 oder 2, **dadurch gekennzeichnet, dass** die Verbindungsstege (6) gleichmäßig über den Umfang der Welle (2) verteilt sind.

4. Permanentmagnetrotor nach einem der vorangehenden Ansprüche, **dadurch gekennzeichnet, dass** die Anzahl der Verbindungsstege (6) einem ganzzahligen Vielfachen der Anzahl von magnetischen Polen (22) des Rotors entspricht.

5. Permanentmagnetrotor nach einem der vorangehenden Ansprüche, **dadurch gekennzeichnet, dass** die Breite der Verbindungsstege (6) in Umfangsrichtung bezogen auf die Längsachse (X) der Welle (2) jeweils in zumindest einem ersten der Welle (2) zugewandten Abschnitt (8) konstant ist, wobei sich in radialer Richtung an diesen ersten Abschnitt (8) bevorzugt jeweils ein zweiter Abschnitt (12) anschließt, in welchem die Breite in Umfangsrichtung gegenüber dem ersten Abschnitt (8) zu- oder abnimmt.

6. Permanentmagnetrotor nach einem der vorangehenden Ansprüche, **dadurch gekennzeichnet, dass** die Verbindungsstege (6) eine radiale Ausdehnung haben, welche 35% bis 60% der radialen Ausdehung des Rotorkörpers (4) beträgt.

7. Permanentmagnetrotor nach einem der vorangehenden Ansprüche, **dadurch gekennzeichnet, dass** im Querschnitt der gesamte Kontaktbereich der Verbindungsstege (6) mit der Welle (2) 40 bis 80% des Umfangs der Welle (2) beträgt.

8. Permanentmagnetrotor nach einem der vorangehenden Ansprüche, **dadurch gekennzeichnet, dass** sich die Verbindungsstege (6) im Querschnitt gesehen zwischen Welle (2) und Rotorkörper (4) gewinkelt zum Radius erstrecken, wobei die Verbindungsstege (6) vorzugsweise jeweils einen der Welle zugewandten ersten Abschnitt (8) aufweisen, welcher sich in radialer Richtung erstreckt, und einen sich in radialer Richtung anschließenden zweiten Abschnitt (12) aufweisen, welcher sich gewinkelt zum Radius erstreckt.

9. Permanentmagnetrotor nach einem der vorangehenden Ansprüche, **dadurch gekennzeichnet, dass** die Freiräume (10) zwischen den Verbindungsstegen (6) durch sich in Längsrichtung (X) des Rotors erstreckende Kanäle gebildet sind, welche sich zu zumindest einem Längsende (14, 16) des Rotorkörpers (4) hin im Querschnitt erweitern und ferner vorzugsweise so ausgebildet sind, dass sie sich durchgehend über die gesamte axiale Länge des Rotorkörpers (4) erstrecken oder jeweils durch eine Trennwand in zwei Teile geteilt sind.

10. Permanentmagnetrotor nach einem der vorangehenden Ansprüche, **dadurch gekennzeichnet, dass** der Rotorkörper (4) im Spritzguss gefertigt ist, wobei die Angussstellen (24) an Winkelpositionen bezüglich der Längsachse (X) der Welle (2) gelegen sind, welche jeweils der Winkelposition eines magnetischen Pols (22) entsprechen, und wobei bevorzugt an der Winkelposition jedes magnetischen Pols (22) ein Anguss (24) vorgesehen ist.

11. Permanentmagnetrotor nach einem der vorangehenden Ansprüche, **dadurch gekennzeichnet, dass** die Magnetpartikel anisotrope magnetische Eigenschaften aufweisen und eine Ausrichtung vor dem Erstarren des Kunststoffmaterials erfolgt ist.

12. Permanentmagnetrotor nach einem der vorangehenden Ansprüche, **dadurch gekennzeichnet, dass** der Rotorkörper (4) an seinem Außenumfang von einem Mantel (26) aus Metall umgeben ist, welcher insbesondere aus rostfreiem Stahl gefertigt ist und/oder zumindest ein axiales Ende (14, 16) des Rotorkörpers (4) umgreift.

13. Permanentmagnetrotor nach einem der vorangehenden Ansprüche, **dadurch gekennzeichnet, dass** an zumindest einem Axialende (14, 16) des Rotorkörpers (4) sich in axialer Richtung (X) erstreckende Vorsprünge (30, 34) vorhanden sind, welche zur Aufnahme eines Lagers dienen oder an ihrem Axialende Gleitflächen (32, 36) aufweisen.

14. Permanentmagnetrotor nach Anspruch 13, **dadurch gekennzeichnet, dass** die Vorsprünge sich jeweils ausgehend von einem den Rotorkörper (4) mit der Welle (2) verbindenden Verbindungssteg (6) in axialer Richtung (X) erstrecken, wobei vorzugsweise an jedem oder jedem zweiten Verbindungssteg (6) ein solcher Vorsprung (30, 34) ausgebildet ist.

15. Permanentmagnetrotor nach Anspruch 13 oder 14, **dadurch gekennzeichnet, dass** die Vorsprünge (30, 34) zumindest an ihrem äußeren freien Axialende in radialer Richtung vom Außenumfang der Welle (2) beabstandet sind.

16. Permanentmagnetrotor nach einem der Ansprüche 13 bis 15, **dadurch gekennzeichnet, dass** zumindest zwei Vorsprünge miteinander verbundene Anlageflächen für ein Lager oder miteinander verbundene Gleitflächen aufweisen.

17. Permanentmagnetrotor nach einem der vorangehenden Ansprüche, **dadurch gekennzeichnet, dass** an der Welle (2) zumindest ein Formschlussmittel (40, 42) zum formschlüssigen Eingriff mit dem Rotorkörper (4) oder mit zumindest einem den Rotorkörper (4) mit der Welle (2) verbindenden Verbindungssteg (6) ausgebildet sind.

18. Permanentmagnetrotor nach Anspruch 17, **dadurch gekennzeichnet, dass** die Formschlussmittel zumindest eine umfängliche (40) und/oder zumindest eine sich schräg zur Umfangslinie erstreckende Nut (42) aufweist, wobei weiter bevorzugt zumindest zwei schräg verlaufende, zueinander gewinkelte Nuten (42) vorhanden sind.

19. Elektromotor, insbesondere nasslaufender Elektromotor, **dadurch gekennzeichnet, dass** er einen Permanentmagnetrotor nach einem der vorangehenden Ansprüche aufweist.

## Claims

1. A permanent magnet rotor for an electric motor with a central shaft (2) and with a rotor body (4) which surrounds this, wherein the rotor body (4) consists of a plastic material with embedded magnet particles,
**characterised in that**
the rotor body (4) is moulded onto the shaft (2) in a manner such that it is connected to the shaft (2) via several individual connection webs (6) which are distanced to one another in the peripheral direction by way of free spaces (10), wherein each connection web (6) bears with an individual contact region on the shaft (2), the contact regions of the individual connection webs (6) are distanced to one another and the free spaces (10) extend between the connection webs (6) over the complete axial length.

2. A permanent magnet rotor according to claim 1, **characterised in that** the dimensioning of the connection webs (6) and their distance to one another in the peripheral direction is such that a uniform stress distribution over the periphery of the shaft (2) is achieved with regard to the forces acting between the rotor body (4) and the shaft (2).

3. A permanent magnet rotor according to claim 1 or 2, **characterised in that** the connection webs (6) are distributed uniformly over the periphery of the shaft (2).

4. A permanent magnet rotor according to one of the preceding claims, **characterised in that** the number of connection webs (6) corresponds to an integer multiple of the number of magnetic poles (22) of the rotor.

5. A permanent magnet rotor according to one of the preceding claims, **characterised in that** the width of the connection webs (6) in the peripheral direction with respect to the longitudinal axis (X) of the shaft (2) in at least a first section (8) which faces the shaft (2) is constant, wherein a second section (12), in which the width in the peripheral direction increases or decreases with respect to the first section (8) preferably in each case connects to this first section (8) in the radial direction.

6. A permanent magnet rotor according to one of the preceding claims, **characterised in that** the connection webs (6) have a radial extension which is 35% to 60% of the radial extension of the rotor body (4).

7. A permanent magnet rotor according to one of the preceding claims, **characterised in that** in cross section, the total contact region of the connection webs (6) with the shaft (2) is 40 to 80% of the periphery of the shaft (2)

8. A permanent magnet rotor according to one of the preceding claims, **characterised in that** seen in cross section, the connection webs (6) extend between the shaft (2) and the rotor body (4) in a manner angled to the radius, wherein the connection webs (6) preferably each comprise a first section (8) which faces the shaft and which extends in the radial direction, and a second section (12) which connects in the radial direction and which extends in a manner angled to the radius.

9. A permanent magnet rotor according to one of the preceding claims, **characterised in that** the free spaces (10) between the connection webs (6) are formed by channels which extend in the longitudinal direction (X) of the rotor and which widen in cross section towards at least one longitudinal end (14, 16) of the rotor body (4) and are moreover preferably designed such that they extend continuously over the complete axial length of the rotor part (4) or are each divided into two parts by a separating wall.

10. A permanent magnet rotor according to one of the preceding claims, **characterised in that** the rotor body (4) is manufactured by injection moulding, wherein the gate locations (24) with respect to the longitudinal axis (X) of the shaft (2) are situated at angular positions which each correspond to the angle position of a magnetic pole (22) and wherein a gate (24) is preferably provided at the angular position of each magnetic pole (22).

11. A permanent magnet rotor according to one of the preceding claims, **characterised in that** the magnet particles have anisotropic magnetic characteristics and an alignment is effected before the solidification of the plastic material.

12. A permanent magnet rotor according to one of the preceding claims, **characterised in that** the rotor body (4) at its outer periphery is surrounded by a jacket (26) of material which in particular is manufactured of stainless steel and/or embraces at least one axial end (14, 16) of the rotor body (4).

13. A permanent magnet rotor according to one of the preceding claims, **characterised in that** projections (30, 34) which extend in the axial direction (X) and which serve for receiving a bearing or comprise sliding surfaces (32, 36) at their axial end are present on at least one axial end (14, 16) of the rotor body (4).

14. A permanent magnet rotor according to claim 13, **characterised in that** the projections each extend in the axial direction (X) in a manner departing from a connection web (6) which connects the rotor body (4) to the shaft (2), wherein such a projections (30, 34) is preferably formed on each or each second connection web (6).

15. A permanent magnet rotor according to one of the claims 13 or 14, **characterised in that** the projections (30, 34) at least at their outer free axial end are distanced to the outer periphery of the shaft (2) in the radial direction.

16. A permanent magnet rotor according to one of the claims 13 to 15, **characterised in that** at least two projections comprise contact surfaces which are connected to one another, for a bearing or for sliding surfaces which are connected to one another.

17. A permanent magnet rotor according to one of the preceding claims, **characterised in that** at least one positive-fit means (40, 42) for the positive engagement with the rotor body (4) or with at least one connection web (6) which connects the rotor body (4) to the shaft (2) is formed on the shaft (2).

18. A permanent magnet rotor according to claim 17, **characterised in that** the positive-fit means comprises at least one peripheral groove (40) and/or at least one groove (42) which extends obliquely to the peripheral line, wherein further preferably at least two obliquely running grooves (42) which are angled to one another are present.

19. An electric motor, in particular a wet-running electric motor, **characterised in that** it comprises a permanent magnet rotor according to one of the preceding claims.

## Revendications

1. Rotor à aimant permanent pour un moteur électrique comprenant un arbre central (2) et un corps de rotor (4) entourant ce dernier, dans lequel
le corps de rotor (4) est constitué d'une matière plastique avec particules magnétiques incorporées,
**caractérisé en ce que**
le corps de rotor (4) est venu de moulage sur l'arbre (2), **en ce qu'**il est relié à l'arbre (2) par l'intermédiaire de plusieurs entretoises de liaison (6) individuelles espacées les unes des autres dans la direction circonférentielle par des espace libres (10), chaque entretoise de liaison (6) reposant sur l'arbre (2) par une zone d'appui individuelle, les zones d'appui des entretoises de liaison (6) individuelles sont espacées les unes des autres, et les espaces libres (10) s'étendent entre les entretoises de liaison (6) sur toute la longueur axiale.

2. Rotor à aimant permanent selon la revendication 1, **caractérisé en ce que** les entretoises de liaison (6) sont dimensionnées et espacées les unes des autres dans la direction circonférentielle de façon à obtenir, par rapport aux forces agissant entre le corps de rotor (4) et l'arbre (2), une distribution uniforme des contraintes sur la circonférence de l'arbre (2).

3. Rotor à aimant permanent selon la revendication 1 ou 2, **caractérisé en ce que** les entretoises de liaison (6) sont réparties de manière uniforme sur la circonférence de l'arbre (2).

4. Rotor à aimant permanent selon l'une des revendications précédentes, **caractérisé en ce que** le nombre des entretoises de liaison (6) correspond à un multiple entier du nombre de pôles magnétiques (22) du rotor.

5. Rotor à aimant permanent selon l'une des revendications précédentes, **caractérisé en ce que** la largeur des entretoises de liaison (6) dans la direction circonférentielle, rapportée à l'axe longitudinal (X) de l'arbre (2), est respectivement constante dans au moins un premier tronçon (8) orienté vers l'arbre (2), de préférence un second tronçon (12) se raccordant en direction radiale respectivement au dit premier tronçon (8), dont la largeur augmente ou diminue dans la direction circonférentielle par rapport au premier tronçon (8).

6. Rotor à aimant permanent selon l'une des revendications précédentes, **caractérisé en ce que** les entretoises de liaison (6) ont une étendue radiale qui représente 35 à 60 % de l'étendue radiale du corps de rotor (4).

7. Rotor à aimant permanent selon l'une des revendications précédentes, **caractérisé en ce qu'**en coupe transversale la zone de contact totale des entretoises de liaison (6) avec l'arbre (2) représente 40 à 80 % de la circonférence de l'arbre (2).

8. Rotor à aimant permanent selon l'une des revendications précédentes, **caractérisé en ce que** les entretoises de liaison (6), vues en coupe transversale, s'étendent entre l'arbre (2) et le corps de rotor (4) selon un angle par rapport au rayon, les entretoises de liaison (6) présentant, de préférence, chacune un premier tronçon (8) orienté vers l'arbre, qui s'étend dans une direction radiale, et un second tronçon (12) consécutif dans une direction radiale, qui s'étend selon un angle par rapport au rayon.

9. Rotor à aimant permanent selon l'une des revendications précédentes, **caractérisé en ce que** les espaces libres (10) sont formés entre les entretoises de liaison (6) par des canaux s'étendant dans la direction longitudinale (X) du rotor, qui s'élargissent en coupe transversale vers au moins une extrémité longitudinale (14, 16) du corps de rotor (4) et sont, en outre, de préférence réalisés de façon à s'étendre en continu sur toute la longueur axiale du corps de rotor (4) ou sont divisés chacun en deux parties par une paroi de séparation.

10. Rotor à aimant permanent selon l'une des revendications précédentes, **caractérisé en ce que** le corps de rotor (4) est réalisé par moulage par injection, les points de coulée (24) étant situés à des positions angulaires par rapport à l'axe longitudinal (X) de l'arbre (2), lesquelles correspondent respectivement à la position angulaire d'un pôle magnétique (22), et un point de coulée (24) étant prévu de préférence à la position angulaire de chaque pôle magnétique (22).

11. Rotor à aimant permanent selon l'une des revendications précédentes, **caractérisé en ce que** les particules magnétiques présentent des propriétés magnétiques anisotropes, et **en ce qu'**une orientation s'opère avant la solidification de la matière plastique.

12. Rotor à aimant permanent selon l'une des revendications précédentes, **caractérisé en ce que** le corps de rotor (4) est entouré sur sa circonférence extérieure par une enveloppe métallique (26), qui est notamment réalisée en acier inoxydable et/ou entoure au moins une extrémité axiale (14, 16) du corps de rotor (4).

13. Rotor à aimant permanent selon l'une des revendications précédentes, **caractérisé en ce que** des saillies (30, 34) s'étendant dans la direction axiale (X) sont prévues sur au moins une extrémité axiale (14, 16) du corps de rotor (4) dans la direction axiale, lesquelles servent à recevoir un palier ou présentent, à leur extrémité axiale, des surfaces de glissement (32, 36).

14. Rotor à aimant permanent selon la revendication 13, **caractérisé en ce que** les saillies s'étendent respectivement dans la direction axiale (X) à partir d'une entretoise de liaison (6) reliant le corps de rotor (4) et l'arbre (2), une telle saillie (30, 34) étant formée, de préférence, au niveau de chaque ou de chaque seconde entretoise de liaison (6).

15. Rotor à aimant permanent selon la revendication 13 ou 14, **caractérisé en ce que** les saillies (30, 34) sont espacées de la circonférence extérieure de l'arbre (2) au moins au niveau de leur extrémité axiale libre extérieure dans une direction radiale.

16. Rotor à aimant permanent selon l'une des revendications 13 à 15, **caractérisé en ce qu'**au moins deux saillies présentent des surfaces d'appui d'un palier reliées entre elles, ou des surfaces de glissement reliées entre elles.

17. Rotor à aimant permanent selon l'une des revendications précédentes, **caractérisé en ce qu'**au moins un moyen de liaison par complémentarité de forme (40, 42) est formé sur l'arbre (2) pour une mise en prise par complémentarité de forme avec le corps de rotor (4) ou avec au moins une entretoise de liaison (6) reliant le corps de rotor (4) et l'arbre (2).

18. Rotor à aimant permanent selon la revendication 17, **caractérisé en ce que** les moyens de liaison par complémentarité de forme comprend au moins une rainure périphérique (40) et/ou au moins une rainure (42) s'étendant en oblique par rapport à la circonférence, plus préférablement au moins deux rainures s'étendant en oblique et inclinées l'une par rapport à l'autre (42) étant prévues.

19. Moteur électrique, en particulier moteur électrique à fonctionnement humide, **caractérisé en ce qu'**il comporte un rotor à aimant permanent selon l'une des revendications précédentes.
